# EUROPÄISCHE PATENTSCHRIFT

(11) **EP 2 659 810 B1**
(45) Veröffentlichungstag und Bekanntmachung des Hinweises auf die Patenterteilung: **18.07.2018**
(21) Anmeldenummer: 13166030.0
(22) Anmeldetag: 30.04.2013
(51) Int. Cl.: A47J 43/07, A47B 91/04

(54) **Standfuß eines Gerätes, insbesondere einer Tisch-Küchenmaschine**
Stand of a device, in particular a table-top kitchen appliance
Pied de support d'un appareil, notamment d'une machine de cuisine de table

(30) Priorität: 02.05.2012 DE 102012103810; 26.02.2013 DE 102013101907
(43) Veröffentlichungstag der Anmeldung: 06.11.2013
(73) Patentinhaber: Vorwerk & Co. Interholding GmbH, 42275 Wuppertal (DE)
(72) Erfinder: Schomacher, Jutta, 42489 Wülfrath (DE); Dallmeier, Stephanie, 42279 Wuppertal (DE)
(74) Vertreter: Müller, Enno

(56) Entgegenhaltungen:
- EP-A1- 2 325 520
- WO-A1-2006/042432
- WO-A1-2008/130177
- JP-A- 2008 086 609
- US-A- 5 042 765
- US-A1- 2007 262 213

## Beschreibung

Die Erfindung betrifft einen Standfuß eines Gerätes nach den Merkmalen des Oberbegriffes des Anspruches 1.

Standfüße, insbesondere für Küchenmaschinen, sind bekannt. Diese sind zur Abstützung des Gerätes, insbesondere der Küchenmaschine, auf einer Fläche, insbesondere auf einer Tischfläche, ausgelegt, wobei weiter bevorzugt über den Standfuß in dem Gerät hervorgerufene Schwingungen, insbesondere wenn das Gerät zu anderen Zwecken einen Antriebsmotor aufweist, gedämpft werden. Es soll nicht zu Versetzungen oder gar Sprüngen des Gerätes relativ zu der Fläche kommen.

Aus der DE 29622725 U1 ist ein Schwingungsdämpfer für Transformatoren bekannt, bei welchem ein zur Schwingungsdämpfung vorgesehenes Weichteil zwischen zwei gegensinnig geöffneten Schalenabschnitten des Standteils und einer Auflagereinrichtung aufgenommen ist. Der Fortsatz erstreckt sich nur bis in die Auflagereinrichtung.

Aus der WO2006/042432 A1 ist ein Standfuß bekannt, der lediglich eine Vertikalbewegung zulässt. In dieser Beziehung gleiche Gestaltungen sind auch aus der US 5,042,765 A, der WO2008/130177 A1, der US 2007/262213 A1 und der JP 2008/086609 A bekannt. Aus der EP 2325520 A1 ist ein Standfuß bekannt, bei welchem das Standteil insgesamt als Weichteil ausgebildet ist. Das Weichteil bildet einen äußeren schalartigen Umgriff zu dem Fortsatz aus, der zugleich das Standteil hieran haltert.

Ausgehend von dem genannten Stand der Technik beschäftigt sich die Erfindung mit der Aufgabenstellung, eine im Hinblick auf eine wirkungsvolle Dämpfung von Bewegungen und auch möglichst vorteilhafte Montage günstige Gestaltung eines Standfußes anzugeben.

Diese Aufgabe ist beim Gegenstand des Anspruches 1 gelöst, wobei darauf abgestellt ist, dass der Fortsatz in dem Schalenabschnitt auch horizontal beweglich aufgenommen ist, dass das Weichteil weicher eingestellt ist als das Standteil und dass das Standteil einen Halterungsfortsatz aufweist, der unter zumindest teilweiser Durchsetzung des Weichteils mit dem Fortsatz verbunden ist. Hierdurch ist eine günstige Gestaltung für eine effektive Dämpfungen von Bewegungen erreicht.

Der gehäuseseitige Fortsatz ist insbesondere quer zu einer Vertikalrichtung, d.h. entsprechend bevorzugt in einer Horizontalrichtung gegenüber dem das Standteil ausbildenden, weiter entsprechend bevorzugt die Standfläche anbietenden Schalenabschnitt beweglich gelagert. In der Zusammenwirkung des Fortsatzes mit dem in dem Schalenabschnitt aufgenommenen Weichteil kann sich bei entsprechender Horizontalbewegung eine elastische Verformung des Weichteiles in dieser horizontalen Richtung sich einstellen.

Das Weichteil bildet auf keinem Zwischenabschnitt des Standfußes einen alleinigen Querschnitt. Vielmehr fassen der Fortsatz und der Schalenabschnitt, gegensätzlich gerichtet, in seitlicher Überdeckung ineinander. Hierdurch ist eine günstige Möglichkeit der Abstützung und Aufnahme des Weichteils gegeben. Zudem ergibt sich, dass das Weichteil hinsichtlich Angriffen von außen in einer Geschütztlage ist. Das Weichteil ist auch hierdurch in der Regel nicht sichtbar.

Der Halterungsfortsatz kann durch die Verbindung mit dem Fortsatz, der sich von dem Gehäuse aus nach unten erstreckt, das Weichteil vollständig durchsetzen. Die Halterung des Halterungsfortsatzes an dem Fortsatz des Gehäuses erbringt die günstige Montage.

Es kann beispielsweise verwirklicht sein, wie nachstehend auch noch weiter erläutert, dass die Befestigung im Zuge des Zusammenbaus zwischen dem Halterungsfortsatz und dem Fortsatz vom Gehäuseinneren her vorgenommen werden kann. Dies kann sich etwa als günstig erweisen im Zuge einer Fertigung eines solchen Gerätes "von unten nach oben".

Bei dem Weichteil handelt es sich bevorzugt um ein Schaumstoffteil, weiter bevorzugt um ein Polyuretan-Schaumstoffteil. Es kann ein offenporiger oder geschlossenporiger Schaumstoff sein, wobei geschlossenporiger Schaumstoff, insbesondere im Zusammenhang bei einer Küchenmaschine, Vorzüge aufweist.

Von Bedeutung ist auch, dass das Weichteil bevorzugt insgesamt, insbesondere in dem durch den Fortsatz beaufschlagten Bereich, weicher eingestellt ist als das Standteil. Es weist entsprechend eine geringere Shore-Härte als das Standteil auf.

Der nach oben offene Schalenabschnitt bildet insbesondere eine bevorzugt umlaufende Begrenzung des durch den Schalenabschnitt gegebenen Ausweichraumes für das Weichteil. Das Weichteil kann bei Bewegungen des Fortsatzes relativ zu dem Standteil im Überdeckungsbereich zu dem Fortsatz zwischen dem Fortsatz und der Wand des Schalenabschnittes komprimiert werden.

Das Weichteil ist bevorzugt unverlierbar in dem Schalenabschnitt angeordnet. Der Schalenabschnitt kann einteilig mit dem Standteil ausgebildet sein. Die Bodenfläche des Schalenabschnittes kann bevorzugt unmittelbar die Standfläche bilden. Im Hinblick auf eine mittelbare Bildung der Standfläche kann dies etwa dadurch gegeben sein, dass unterhalb des Bodens noch ein mittelbar auf dem Boden aufsitzendes Teil, beispielsweise ein Elastomerteil, angeordnet ist. Weiter bevorzugt ist das Weichteil hinsichtlich seiner Shore-Härte so eingestellt, dass der geräteseitige Fortsatz bei üblichem Maximalgewicht des Gerätes beziehungsweise insbesondere der Küchenmaschine das Weichteil nicht derart komprimiert, dass sich ein gleichsam starrer Übergang zu dem Standteil ergibt. Vielmehr ist die Härte so gewählt, dass auch dann immer noch sich ein elastisches Einfedern einstellen kann.

Bevorzugt ist der Fortsatz selbst gegenüber dem Weichteil härter ausgebildet, insbesondere durch eine Ausbildung des Fortsatzes aus Hartkunststoff oder Metall. Auch das die Standfläche ausbildende, weiter bevorzugt zugleich den Schalenabschnitt ausformende Standteil ist gegenüber dem Weichteil härter eingestellt, dies auch bevorzugt zufolge Ausgestaltung des Standteils als Hartkunststoffteil oder beispielsweise Metallteil.

Zufolge der bevorzugt vorgesehenen seitlichen Überdeckung zwischen Weichteil und Fortsatz kann es zu einer Wulstbildung im Weichteil beim Zusammendrücken kommen. Zugleich kann der Wulst aber zufolge der Elastizität des Weichteils auch wieder eingedrückt sein. Hiermit ist nicht notwendig auch eine Vertikalbewegung des Gerätes verbunden. Vielmehr kann sich sogar einstellen, dass sich die Effekte kompensieren, so dass es also praktisch bei üblichen Horizontalbewegungen nicht zu einem Eintauchen des Gerätes insoweit kommt.

Die Bewegung des Fortsatzes insbesondere in Horizontalrichtung relativ zu dem Standteil erzeugt in dem damit verformend beanspruchten Weichteil entsprechend eine Rückstell-Federkraft, dies unter Relativverschiebung auch des Fortsatzes zu dem Weichteil. Die vertikale Beweglichkeit des Fortsatzes in dem Schalenabschnitt erfolgt nach vertikal unten bevorzugt auch entgegen einer Rückstell-Federkraft des Weichteils, das bei einer Gewichtsaufbringung beziehungsweise vertikalen Abwärtsverlagerung des Fortsatzes entsprechend komprimiert wird.

Bei einer entsprechenden Beanspruchung können sich vertikale und horizontale Bewegungen des Fortsatzes überlagern.

Bei Küchenmaschinen insbesondere in einem Betriebsmodus, in welchen Teig zubereitet wird, kann sich dem drehenden Rührwerk durch die Zähigkeit des Teiges ein hoher Widerstand entgegengesetzen. Hierdurch kann es auch zu ruckartigen Bewegungen kommen bei hohem Antriebsmoment des das Rührwerk antreibenden Motors. Bevorzugt wird eine solche Küchenmaschine über eine Mehrzahl von Standfüßen, insbesondere wie sie hier beschrieben sind, abgestützt.

Die stoß- oder schwungartig in den Standfuß eingeleitete Energie wird in Reibung zwischen den zugeordneten und aufeinanderliegenden Flächen von Fortsatz und Weichteil umgesetzt, dies auch bevorzugt in Bezug auf die zugeordneten und aufeinanderliegenden Flächen des Weichteils und des Standteils. Durch einen Standfuß in einer der Ausführungsformen, die hier beschrieben sind, kann erreicht werden, dass sich gleichwohl gegenüber der Auflagefläche, beispielsweise der Tischfläche, auch bei solchen singulären Beanspruchungen keine Positionsveränderung ergibt. Die horizontale Beweglichkeit des Fortsatzes in dem Schalenabschnitt ist bevorzugt begrenzt. Dies weiter bevorzugt durch die in Überdeckung zu dem Fortsatz befindliche Schalenwandung des Schalenabschnittes. Ergänzend oder gegebenenfalls auch alternativ kann diese Begrenzung sich auch durch eine Materialaufwerfung im Bereich des Weichteiles zufolge einer üblichen kombinierten Vertikal- und Horizontalbelastung vermittels des gehäuseseitigen Fortsatz einstellen.

Durch die Anordnung des Weichteiles und die entsprechende Zusammenwirkung mit dem Standteil sowie mit dem Fortsatz sind auch beispielsweise durch eine Unwucht hervorgerufene kritische Schwingungen gut kompensierbar. Es ergibt sich gleichsam eine schwimmende Lagerung insbesondere in horizontaler Bewegungsrichtung des Fortsatzes.

In weiterer bevorzugter Ausgestaltung ist vorgesehen, dass der Fortsatz zur Zusammenwirkung mit dem Weichteil hinsichtlich einer horizontalen Bewegung mit einem Vertikalabschnitt des Weichteils in Überdeckung ist. Entsprechend wird bei einer horizontalen Bewegung des Fortsatzes bevorzugt eine Komprimierung des Weichteiles zufolge bevorzugt stumpfer Beaufschlagung des Weichteiles im Bereich eines Vertikalabschnittes desselben erreicht. Bevorzugt weist hierzu der Fortsatz einen entsprechenden Abschnitt auf zur Zusammenwirkung mit dem Vertikalabschnitt des Weichteiles, welcher Abschnitt in einer Ausgestaltung zugleich auch die Abstützung des Fortsatzes in Vertikalrichtung auf dem Weichteil erbringt. Alternativ ist für die Vertikalabstützung des Fortsatzes auf dem Weichteil ein gesonderter Fortsatz-Abschnitt vorgesehen, weiter bevorzugt ein Abschnitt, welcher sich in Bezug auf einen Vertikalschnitt durch den Fortsatz mit horizontalem Abstand außerhalb des dem Weichteil-Vertikalabschnitt zugeordneten Fortsatz-Abschnitt erstreckt.

Bevorzugt ist in diesem Zusammenhang weiter, dass das Weichteil zumindest teilweise kreisringförmig gestaltet ist, wobei weiter bevorzugt insbesondere die die Kreisringöffnung begrenzende Weichteil-Fläche den Vertikalabschnitt zur Zusammenwirkung mit einem Fortsatz-Abschnitt bei einer horizontalen Bewegung bildet. Hierbei erweist es sich weiter von Vorteil, insbesondere diesen, mit dem Vertikalabschnitt des Weichteiles, weiter insbesondere den mit der die Kreisringöffnung begrenzenden Fläche zusammenwirkenden Abschnitt des Fortsatzes hinsichtlich seiner Außenwandung zumindest teilweise kreisringförmig auszubilden. Ist ein gesonderter Fortsatz-Abschnitt zur Zusammenwirkung mit dem Weichteil bei einer Vertikalbewegung vorgesehen, so verläuft dieser bevorzugt konzentrisch zu dem mit der Kreisringöffnung des Weichteiles zusammenwirkenden Abschnitt des Fortsatzes.

Das Standteil weist weiter bevorzugt einen sich vertikal erstreckenden Halterungsabschnitt auf, der in Halterungsverbindung, die bevorzugt als Formschlussverbindung realisiert ist, zu dem Fortsatz ist. Hierdurch ist bevorzugt nicht nur das Standteil selbst unverlierbar mit dem Fortsatz verbunden, sondern bevorzugt auch das in dem Schalenabschnitt aufgenommene Weichteil, etwa zufolge einer kreisförmigen oder kreisringförmigen, den Halterungsfortsatz umgebenden Ausgestaltung. Eine beispielsweise Tisch-Küchenmaschine kann somit ohne Verlust des Standteiles wahlweise angehoben und versetzt werden. Die Formschlussverbindung ist hierbei bevorzugt so gestaltet, dass eine vertikale Beweglichkeit des Fortsatzes relativ zu dem Standteil gegeben ist, wobei weiter bevorzugt die Formschlussverbindung zwischen Fortsatz und standteilseitigem Halterungsabschnitt eine Begrenzung der vertikalen Beweglichkeit in einer Richtung darstellt.

Der Halterungsabschnitt ist hierbei weiter bevorzugt als ein den Fortsatz vertikal durchsetzender Zapfen ausgebildet, weiter bevorzugt in Form eines kreiszylindrischen Zapfens. Dieser Zapfen ist bei weiter bevorzugter kreisringförmiger Anordnung der Schalenwandung des Standteiles zentral aus dem Schalenboden herauswachsend angeordnet, weiter bevorzugt entsprechend zentral die vertikale Körperachse des Standteiles aufnehmend. Der Zapfen durchsetzt bevorzugt den Fortsatz in vertikaler Richtung, d.h. bevorzugt parallel verlaufend zu einer Absenkrichtung des mit der Küchenmaschine verbundenen Fortsatzes. Der Formschluss ist hierbei bevorzugt durch eine Übergreifscheibe erreicht, welche weiter bevorzugt sowohl mit dem Zapfen als auch mit einer Gegenfläche am Fortsatz zusammenwirkt. Fortsatz und Standteil sind über den Zapfen bevorzugt insbesondere entlang einer sowohl den Fortsatz als auch das Standteil durchsetzenden Vertikalachse teleskopartig zueinander beweglich.

Der Fortsatz ist bevorzugt in seinem in Überdeckung zu dem Standteil befindlichen Abschnitt zumindest teilweise röhrenartig ausgebildet, insbesondere zum vertikalen Durchsatz des standteilseitigen Zapfens. Der freie Innendurchmesser des röhrenartigen Standteil-Abschnittes ist hierbei größer gewählt als der Außendurchmesser des standteilseitigen Zapfens bzw. größer als dessen größtes Quererstreckungsmaß im Durchsatzbereich, womit die relative horizontale Beweglichkeit des Fortsatzes zu dem Schalenabschnitt bzw. zu dem Standteil erreicht ist. Hierbei ist bevorzugt in jeder horizontalen Ausrichtung des Fortsatzes relativ zu dem Standteil die formschlüssige Halterung des Standteiles an dem Fortsatz gegeben.

Bevorzugt ist das Material des Weichteils und die Überdeckung des Fortsatzes zu dem Weichteil so gewählt bzw. eingestellt, dass bei einer Verschiebung von 1 mm bezüglich aller auf einer Unterlage aufstehenden Standfüße der Küchenmaschine (bevorzugt: 4 Standfüße) eine Rückstellkraft von 5 N oder mehr, bis hin zu bevorzugt 15 N, weiter bevorzugt etwa 10 N einstellt.

Zudem ist diesbezüglich bevorzugt, dass mit zunehmender Horizontalverschiebung der in Überdeckung zu den Weichteilen liegenden Fortsätze die Rückstellkraft insbesondere der Weichteile (jeweils) überproportional zunimmt. So stellt sich bevorzugt bei einer Verdopplung der Horizontalverschiebung von 1 mm auf 2 mm eine Rückstellkraft ein, die dem 2,1- bis 3-Fachen, weiter bevorzugt etwa dem 2,5-Fachen des Rückstellwertes bei 1 mm entspricht. Bevorzugt ergibt sich bei einer Horizontalverschiebung von 2 mm eine Rückstellkraft der Weichteile von etwa 25 N. Entsprechend ist eine nicht-lineare Zunahme der Rückstellkraft vorgesehen.

Das Weichteil kann, wie schon angesprochen, aus einem Schaumstoff bestehen. Es kann hierbei nicht nur aus einem offenporigen oder geschlossenporigen, sondern auch aus einem gemischtporigen Schaumstoff bestehen. Bevorzugt ein Polyurethan-Schaum, weiter bevorzugt ein gemischtzelliger Polyurethan-Schaumstoff mit teilweise geschlossenen und teilweise offenen Poren.

Bevorzugt weist ein Weichteil eine Zugfertigkeit (Minimalwert nach DIN53571) von 0,5 bis 1,5 N/mm², weiter bevorzugt 0,56 bis 1,3 N/mm² auf. In bevorzugter Ausgestaltung ist eine Zugfertigkeit von 0,78 N/mm² vorgesehen.

Weiter bevorzugt ist ein Weichteil so eingestellt, dass sich in Anlehnung an die EN 826 ein statisches Elastizitätsmodul von 0,05 bis 1,3 N/mm² einstellt, weiter bevorzugt 0,14 bis 0,75 N/mm². Zudem ist ein dynamisches Elastizitätsmodul nach DIN53513 von 0,3 bis 1,8 N/mm², weiter bevorzugt 0,6 bis 1,3 N/mm² vorgesehen.

Nachstehend ist die Erfindung anhand der beigefügten Zeichnung erläutert, die aber lediglich ein Ausführungsbeispiel darstellt. Auf der Zeichnung zeigt:
- Fig. 1: in perspektivischer Darstellung eine Tisch-Küchenmaschine mit Standfüßen zum Aufstellen der Küchenmaschine auf einer Tischfläche;

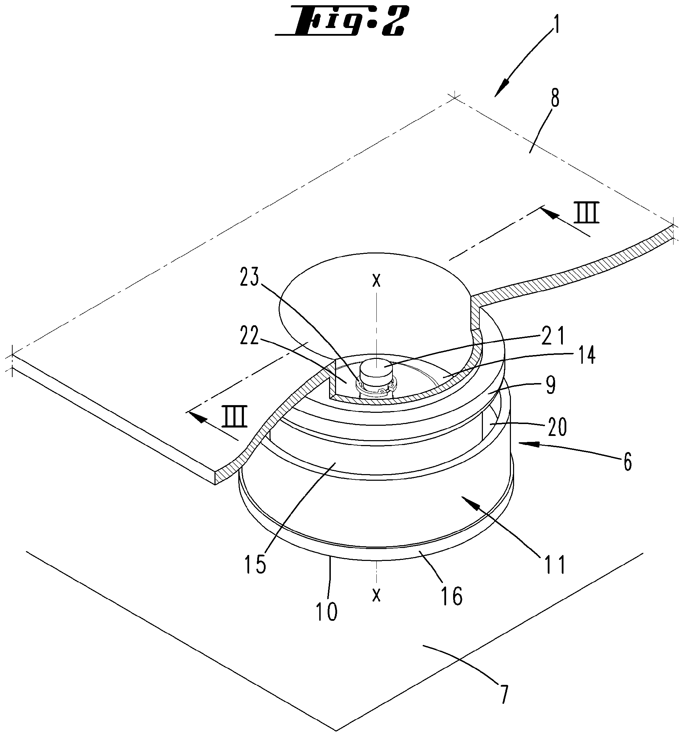

- Fig. 2: eine perspektivische, teilweise aufgebrochene Darstellung eines Bodenbereiches der Küchenmaschine mit einem Standfuß;
- Fig. 3: den Schnitt gemäß der Linie III-III in Fig. 2, eine im Wesentlichen unbelastete Grundstellung des Standfußes betreffend;
- Fig. 4: eine der Fig. 3 entsprechende Darstellung, bei einer vertikalen Belastung des Standfußes;
- Fig. 5: eine weitere, der Fig. 3 entsprechende Darstellung bei einer horizontalen Belastung;
- Fig. 6: eine der Fig. 3 entsprechende Darstellung, bei einer überlagerten vertikalen und horizontalen Belastung.

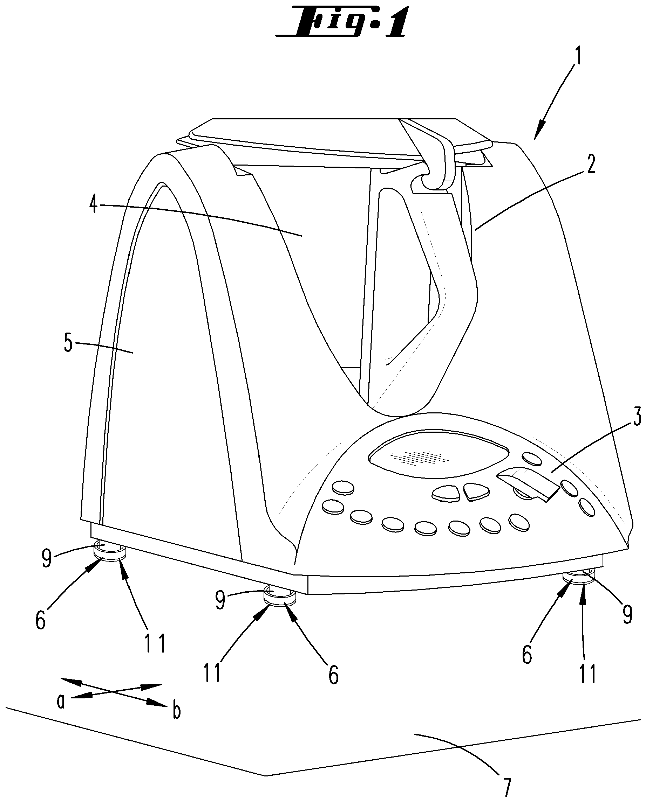

Dargestellt und beschrieben ist zunächst mit Bezug zu Fig. 1 eine Küchenmaschine 1 mit einer Rührgefäß-Aufnahme 2 und einem Bedienfeld 3.

Der Küchenmaschine 1 ist ein Rührtopf 4 zugeordnet. Dieser sitzt in der Rührgefäß-Aufnahme 2 ein. In dem Rührtopf 4 ist zugeordnet einem Rührtopfboden ein Rührwerk vorgesehen, welches über einen in der Küchenmaschine 1 unterhalb der Aufnahme 2 angeordneten, nicht dargestellten Elektroantrieb betrieben wird.

Das Gehäuse 5 der Küchenmaschine 1 stützt sich über Stützfüße 6 auf einer Fläche, hier einer Tischfläche 7 ab. Die Stützfüße 6 sind hierzu unterseitig eines Gehäusebodens 8 befestigt.

Die Küchenmaschine 1 ist unter anderem geeignet zur Herstellung von Teigen. In einem solchen Teigmodus wird mit dem sich drehenden Rührwerk durch die Zähigkeit des Teiges ein hoher Widerstand entgegengesetzt. Das erforderliche Antriebsmoment des Motors wird, natürlich bei sonstigem Motorbetrieb auch, über das Gehäuse 5 und die Stützfüße 6 abgestützt. Ist die Teigkugel ungünstig im Rührgefäß 4 angeordnet, bleibt das Rührwerk gegebenenfalls kurzzeitig im Teig stecken. Zufolge dessen wird das Drehmoment kurzzeitig erhöht. Auch ein solcher Momentenstoß wird von den Stützfüßen 6 kompensiert, so dass sich das Gerät nicht ruckartig und sprunghaft um seinen Schwerpunkt dreht. Darüber hinaus werden über die Stützfüße 6 Vibrationen bzw. insbesondere vertikale Stöße in Richtung auf die Tischfläche 7 kompensiert.

Die Bewegung des Gehäuses 5 in horizontaler Richtung (vergleiche Pfeil a und b in Fig. 1) wird zugelassen. Das Gehäuse 5 kann sich relativ zu den Stützfüßen 6 bzw., wie nachstehend näher erläutert, relativ zu einem Teilabschnitt der Stützfüße 6 in der horizontalen Ebene bewegen. Die gegebenenfalls sprungartig eingeleitete Energie wird in Reibung und/oder Rückstell- und Verformungsenergie umgewandelt. Die Stützfüße 6 sind hierbei bevorzugt auf der Standfläche - hier der Tischfläche 7 - nur aufsitzend und durch Reibschluss an einer Bewegung relativ zu der Standfläche gehindert. Darüber hinaus sind durch die Ausgestaltung der Stützfüße 6 zudem auch relative Vertikalbewegungen des sich über die Stützfüße 6 abstützenden Gehäuses 5 insbesondere relativ zu einem Teilabschnitt der Stützfüße 6 gegeben.

Jeder Stützfuß 6 ist im Wesentlichen zweiteilig gestaltet, wobei ein Teil gehäusefest vorgesehen ist. Hierbei handelt es sich um einen Fortsatz 9, der gehäuseseitig, insbesondere gehäusebodenseitig, angeformt ist und nach vertikal unten über die nach unten gerichtete Gehäusebodenfläche frei abragt. In alternativer Ausgestaltung ist der Fortsatz 9 bevorzugt oberhalb des Gehäusebodens 8 mit einem Wiegebalken einer Wägevorrichtung bevorzugt starr verbunden, welcher Wiegebalken anderenends wiederum an dem Gehäuse, insbesondere Gehäuseboden 8 angreift.

Der Fortsatz 9 ist als Starrteil ausgebildet, weiter bevorzugt zufolge einstückiger, materialeinheitlicher Ausgestaltung zusammen mit dem Gehäuseboden 8. Entsprechend kann es sich bei dem Fortsatz 9 um einen Hartkunststoff- oder Metallkörper handeln, der weiter bevorzugt mit Bezug auf eine zentral den Fortsatz 9 durchsetzende Vertikalachse x rotationssymmetrisch ausgebildet ist. Neben der einstückigen Ausgestaltung ist weiter alternativ ein Fortsatz 9 vorgesehen, der unterseitig am Gehäuseboden 8 festlegbar, beispielsweise einschraubbar ist.

Der gehäuseseitige Fortsatz 9 sitzt im Wesentlichen auf einem, eine Standfläche 10 ausbildenden Standteil 11 auf, welches Standteil 11 entsprechend im Wesentlichen das zweite Teil des Stützfußes 6 bildet.

Der Fortsatz 9 ist im Wesentlichen als rotationssymmetrischer Hohlkörper gebildet, mit einer umlaufenden Fortsatzwandung 12. In die durch die Fortsatzwandung 12 umfasste Röhrenöffnung 13 ist mit vertikalem Abstand zur nach vertikal unten freien Randkante der Fortsatzwandung 12 ein Boden 14 einstückig und bevorzugt materialeinheitlich mit der Fortsatzwandung 12 eingezogen.

An dem Boden 14 ist unterseitig, entsprechend nach vertikal unten gerichtet, eine konzentrisch zur Vertikalachse x angeordneter Röhrenabschnitt 15 angeformt, dessen nach vertikal unten weisende Stirnfläche über die durch die nach unten weisende freie Randkante der Fortsatzwandung 12 definierte Horizontalebene hinausragt. Der vertikale Abstand c zwischen der sich in einer Horizontalebene erstreckenden Stirnfläche des Röhrenabschnittes 15 und der Stirnrandkante der Fortsatzwandung 12 entspricht bevorzugt einem Fünftel bis einem Zehntel, weiter bevorzugt etwa einem Achtel des Außendurchmessers d der Fortsatzwandung 12.

Das freie radiale Abstandsmaß e zwischen der Wandungsaußenseite des Röhrenabschnittes 15 und der Wandungsinnenseite der Fortsatzwandung 12 entspricht weiter bevorzugt etwa einem Drittel bis einem Halben, weiter bevorzugt etwa einem Viertel des Fortsatzwandungs-Außendurchmessers d.

Der Röhrenabschnitt 15 ist zentral durchsetzt von einem kreiszylinderförmigen Durchbruch 19, welcher zugleich auch den Boden 14 durchsetzt.

Das Standteil 11 formt einen nach vertikal oben offenen Schalenabschnitt 16 aus, weist entsprechend einen weiter bevorzugt kreisscheibenförmigen Schalenboden 17 und eine umlaufende Schalenwandung 18 auf. Die vertikale Höhe der Schalenwandung 18 entspricht im Wesentlichen dem vertikalen Erstreckungsmaß des Durchbruchs 19 im Fortsatz 9.

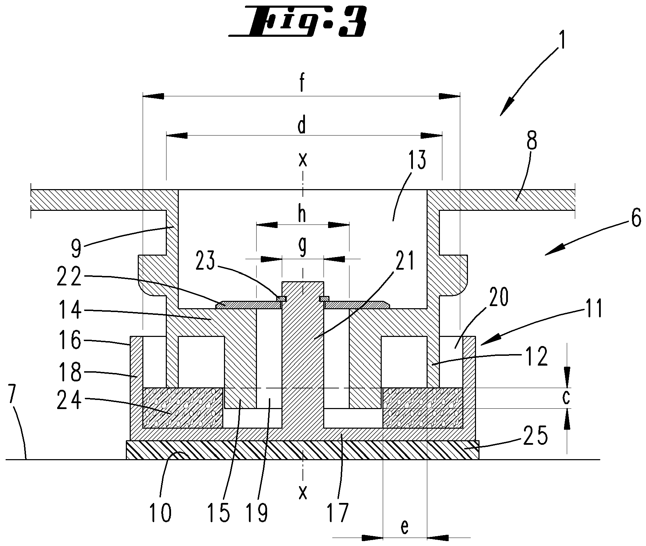

Der Innendurchmesser f des Schalenabschnittes 16 entspricht bevorzugt dem 1,1- bis 1,5-, weiter bevorzugt dem 1,2- bis 1,4-Fachen des Außendurchmessers d der Fortsatzwandung 12, womit sich in einer wie in Fig. 3 dargestellten Grundausrichtung umlaufend zwischen der Fortsatzwandung 12 und der Schalenwandung 18 ein Ringspalt 20 einstellt.

Ausgehend von der schaleninnenseitigen Oberfläche des Schalenbodens 17 wächst ein bevorzugt im Querschnitt kreisscheibenförmiger Zapfen 21 aus. Dieser ist bevorzugt zentral angeordnet und einstückig, materialeinheitlich mit dem Schalenabschnitt 16 ausgeformt. Der Durchmesser g ist hierbei kleiner gewählt als der Innendurchmesser h des fortsatzseitigen Durchbruches 19, wobei der Zapfen 21 den Durchbruch 19 durchtretend mit seiner nach vertikal oben weisenden Stirnfläche über die nach oben weisende Ebene des Fortsatz-Bodens 14 hinausragt. Bei konzentrischer Anordnung von Fortsatz 9 und Schalenabschnitt 16 bzw. Standteil 11 ergibt sich zwischen dem Zapfen 21 und der Wandung des Durchbruches 19 ein umlaufender Spalt, dessen Radialmaß bevorzugt gleich oder größer ist dem Radialmaß des Ringspaltes 20.

Das Standteil 11 ist an dem Fortsatz 9 formschlüssig gehaltert. Hierzu ist eine Übergreifscheibe 22 vorgesehen, welche zentral durchsetzt ist von dem Zapfen 21 und bevorzug auf der nach oben weisenden Oberfläche des Fortsatz-Bodens 14 aufliegt. Ein oberhalb der Übergreifscheibe 22 wandungsaußenseitig an dem Zapfen 21 vorgesehener Kragen 23, bevorzugt in Form eines Sprengringes oder dergleichen fesselt das Standteil 11 über die Übergreifscheibe 22 an dem Fortsatz 9, dies unter Ermöglichung einer vertikalen Beweglichkeit des Standteiles 11 relativ zu dem Fortsatz 9, ausgehend von der Darstellung in Fig. 3 nach vertikal oben.

Bodenseitig des Standteiles 11 ist ein Weichteil 24 vorgesehen. Dieses ist bevorzugt kreisringförmig gestaltet und besteht weiter bevorzugt aus einem Weichschaumstoff. Das Weichteil 24 sitzt in dem Schalenabschnitt 16 auf dem Schalenboden 17 auf und weist bevorzugt einen an den Innendurchmesser der Schalenwandung 18 angepassten Außendurchmesser auf. Der freie Innendurchmesser des Weichteiles 24 ist weiter bevorzugt angepasst an den Außendurchmesser des fortsatzseitigen Röhrenabschnittes 15, wobei weiter bevorzugt der Kreisring-Innendurchmesser des Weichteiles 24 etwa dem 1,01- bis 1,1-Fachen des Röhrenabschnitt-Außendurchmessers entspricht.

Das Weichteil 24 ist in einer bevorzugten Ausgestaltung lediglich durch Reib- oder Formschluss in dem Schalenabschnitt 16 gehalten. In alternativer Ausgestaltung ist auch eine Befestigung diesbezüglich möglich, beispielsweise zufolge Verklebung.

Die vertikale Höhe des Weichteiles 24 entspricht weiter bevorzugt etwa der halben Höhe der Schalenwandung 18, wobei weiter auch vertikale Höhen des Weichteiles 24 von bevorzugt ein Fünftel bis zwei Drittel der Schalenwandungshöhe möglich sind.

Die Anordnung ist weiter bevorzugt so gewählt, dass in einer unbelasteten Grundstellung gemäß der Darstellung in Fig. 3 der Fortsatz 9 mit der nach unten weisenden freien Stirnrandkante der Fortsatzwandung 12 auf der nach oben weisenden ringförmigen Oberfläche des Weichteils 24 aufsitzt, während der Röhrenabschnitt 15 des Fortsatzes 9 in die Ringöffnung des Weichteils 24 eintaucht, dies unter vertikaler Beabstandung der nach unten weisenden Röhrenabschnitt-Stirnfläche zur zugewandten Oberfläche des Schalenbodens 17. Diese Stellung ist weiter bevorzugt zudem die Telekop-Auszugsstellung von Fortsatz 9 und Standteil 11, in welcher Stellung sich der Zapfen 21 mit seinem Kragen 23 oberseitig auf der Übergreifscheibe 22 abstützt, welch letztere wiederum bevorzugt auf der zugewandten Oberfläche des fortsatzseitigen Bodens 14 aufliegt. Das Weichteil 24 ist hinsichtlich der Härte bevorzugt so eingestellt, dass dieses in einer Grundbelastung (unter Berücksichtigung eines maximalen Gesamtgewichts der Küchenmaschine 1 und bei nicht aktiviertem Rührwerk) bevorzugt nicht oder nur unwesentlich über die Fortsatzwandung 12 komprimiert wird.

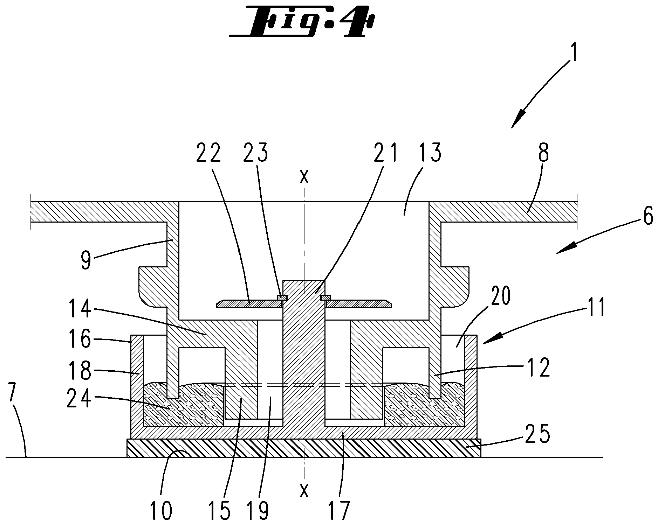

Bei einer wie in Fig. 4 beispielhaft dargestellten rein vertikal gerichteten Stoßbelastung wird zufolge entsprechenden Eintauchens der Fortsatzwandung 12 in das Weichteil 24 und damit einhergehendem Verdrängen des Weichteilmaterials die gewünschte Dämpfung der Stoßenergie erreicht, wobei bevorzugt zufolge außenseitig umlaufender sowie im Bereich der Kreisringöffnung innenseitiger Abstützung des Weichteils 24 die ringförmige Gestalt des Weichteiles 24 im Wesentlichen stabilisiert ist.

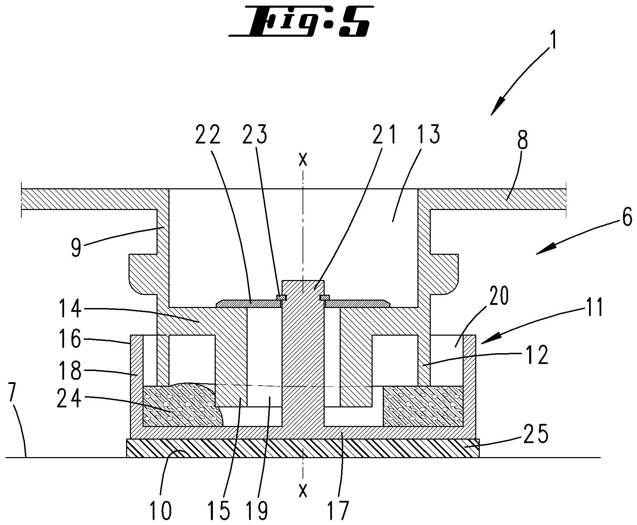

Wie auch die zuvor beschriebene reine vertikale Stoßbelastung ist auch die in Fig. 5 dargestellte reine horizontale Belastung zufolge Schwingungen eher theoretisch. Eine solche reine horizontale Belastung, entsprechend Schwingungen in der durch die Pfeile a und b in Fig. 1 gekennzeichneten Ebene, führen zu einer entsprechenden Verlagerung des Fortsatzes 9 relativ zu dem Standteil 11, wobei der Fortsatz 9 die gemeinsame Vertikalachse x verlässt. Hierbei erfolgt eine Abstützung des fortsatzseitigen Röhrenabschnittes 15 an der zugeordneten Vertikalfäche der Weichteil-Kreisringöffnung, dies weiter unter entsprechender zumindest teilweiser Komprimierung des Weichteilmaterials in der beaufschlagten Zone. Auch hierdurch ist eine ausreichende Dämpfung der Stoßenergie erreicht.

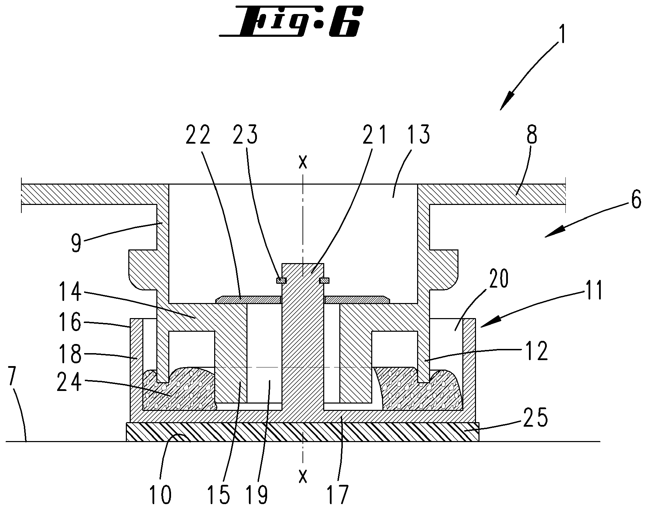

Eine beim üblichen Betrieb einer Küchenmaschine 1 in der Regel auftretende Stoßbelastung sowohl in vertikaler als auch in horizontaler Richtung ist in Fig. 6 dargestellt. Entsprechend ist das Weichteil 24 sowohl von vertikal oben durch die Fortsatzwandung 12 als auch von radial innen nach radial außen im Bereich der Weichteil-Kreisringöffnung durch den Röhrenabschnitt 15 beaufschlagt.

Der Fortsatz 9 ist insgesamt in allen stoßrelevanten Richtungen durch das Weichteil 24 gedämpft gelagert, wobei das Weichteil 24 bevorzugt so ausgelegt ist, dass dieses über die elastischen Rückstellfähigkeiten den Fortsatz 9 jeweils tendenziell in die Ausgangsposition gemäß Fig. 3 drängt. Weiter ist die Härte des Weichteiles 24 so gewählt, dass bei üblichen vertikalen Stoßbelastungen insbesondere bei ordnungsgemäßem Betrieb der Küchenmaschine, d.h. weiter bei ordnungsgemäßer Maximalbefüllung des Rührtopfes 4, die nach vertikal unten weisende freie Stirnfläche des Röhrenabschnittes 15 auch in der Maximalbelastung einen vertikalen Abstand zu der zugewandten Oberfläche des Schalenbodens 17 einhält.

Wie weiter dargestellt, ist bevorzugt der Schalenboden 17 unterseitig mit einem Elastomerteil 25 bevorzugt in Form einer gummierten Unterlage versehen. Das Elastomerteil 25 ist unterseitig an dem Standteil 11 befestigt, beispielsweise klebebefestigt, weiter alternativ zusammen mit dem Standteil 11 beispielsweise in einem Zwei-Komponenten-Spritzverfahren hergestellt.

Die nach unten weisende Fläche des Elastomerteils 25 bildet entsprechend die Standfläche 10 zur Zusammenwirkung mit beispielsweise der Tischfläche 7. Zufolge dieser Ausgestaltung ist das Standteil 11 auch bei über den Fortsatz 9 eingeleiteten Stößen beziehungsweise Vibrationen auf der Tischfläche 7 reibschlussgehaltert.

### Bezugszeichenliste:

- 1: Küchenmaschine
- 2: Rührgefäß-Aufnahme
- 3: Bedienfeld
- 4: Rührtopf
- 5: Gehäuse
- 6: Stützfuß
- 7: Tischfläche
- 8: Gehäuseboden
- 9: Fortsatz
- 10: Standfläche
- 11: Standteil
- 12: Fortsatzwandung
- 13: Röhrenöffnung
- 14: Boden
- 15: Röhrenabschnitt
- 16: Schalenabschnitt
- 17: Schalenboden
- 18: Schalenwandung
- 19: Durchbruch
- 20: Ringspalt
- 21: Zapfen
- 22: Übergreifscheibe
- 23: Kragen
- 24: Weichteil
- 25: Elastomerteil
- a: Bewegungsrichtung
- b: Bewegungsrichtung
- c: Abstand
- d: Durchmesser
- e: Abstand
- f: Innendurchmesser
- g: Durchmesser
- h: Durchmesser
- x: Vertikalachse

## Patentansprüche

1. Standfuß (6) eines Gerätes, insbesondere einer Tisch-Küchenmaschine (1), wobei das Gerät ein Gehäuse (5) mit einem bei üblicher Aufstellung nach unten abragenden Fortsatz (9) aufweist, der auf einem eine Standfläche (10) ausbildenden Standteil (11) mittels eines Weichteils (24) aufsitzt, wobei das Weichteil (24) in einem oben offenen Schalenabschnitt (16) des Standteils (11) aufgenommen ist, wobei sich der Fortsatz (9) bis in seitliche Überdeckung zu dem Schalenabschnitt (16) erstreckt und in dem Schalenabschnitt (16) vertikal beweglich aufgenommen ist, **dadurch gekennzeichnet, dass** der Fortsatz (9) in dem Schalenabschnitt (16) auch horizontal beweglich aufgenommen ist, dass das Weichteil (24) weicher eingestellt ist als das Standteil (11) und dass das Standteil (11) einen Halterungsfortsatz aufweist, der unter zumindest teilweiser Durchsetzung des Weichteils (24) mit dem Fortsatz (9) verbunden ist.

2. Standfuß nach Anspruch 1, **dadurch gekennzeichnet, dass** der Fortsatz (9) mit dem Weichteil (24) zum Einen durch Aufsitzen und zum Anderen durch Zusammenwirkung mit einer freien Seitenfläche, bei relativer Beweglichkeit des Fortsatzes (9) zu der Seitenfläche, zusammenwirkt.

3. Standfuß nach einem der vorhergehenden Ansprüche, **dadurch gekennzeichnet, dass** das Standteil (11) zur verliersicheren Halterung formschlüssig mit dem Fortsatz (9) zusammenwirkt.

4. Standfuß nach einem der vorhergehenden Ansprüche, **dadurch gekennzeichnet, dass** der Fortsatz (9) in dem Schalenabschnitt (16) unter vertikaler Überdeckung zu dem Schalenabschnitt (16) aufgenommen ist.

5. Standfuß nach einem der vorhergehenden Ansprüche, **dadurch gekennzeichnet, dass** das Weichteil (24) zumindest teilweise kreisringförmig gestaltet ist.

6. Standfuß nach einem der Ansprüche 3 bis 5, **dadurch gekennzeichnet, dass** der Formschluss durch eine Übergreifscheibe (22) erreicht ist.

7. Standfuß nach einem der Ansprüche 4 bis 6, **dadurch gekennzeichnet, dass** der Fortsatz (9) in seinem in Überdeckung zu dem Standteil (11) befindlichen Abschnitt zumindest teilweise röhrenartig ausgebildet ist.

8. Standfuß nach einem der Ansprüche 4 bis 7, **dadurch gekennzeichnet, dass** das Material des Weichteils (24) und die Überdeckung des Fortsatzes (9) zu dem Weichteil (24) bezüglich aller auf einer Unterlage aufstehender Standfüße eines Gerätes so gewählt bzw. eingestellt ist, dass sich bei 1 mm horizontaler Verschiebung eine Rückstellkraft von 5 N oder mehr einstellt.

9. Standfuß nach einem der vorhergehenden Ansprüche , **dadurch gekennzeichnet, dass** mit zunehmender Horizontalverschiebung die Rückstellkraft überproportional zunimmt.

## Claims

1. Foot (6) of an appliance, in particular a table-top food processor (1), the appliance comprising a housing (5) having a projection (9) which protrudes downwards when conventionally positioned and which sits, by means of a soft part (24), on a stand part (11) that forms a footprint (10), the soft part (24) being received in a cup portion (16) of the stand part (11) that is open at the top, the projection (9) extending until it laterally covers the cup portion (16) and being vertically movably received in the cup portion (16), **characterised in that** the projection (9) is also horizontally movably received in the cup portion (16), **in that** the soft part (24) is designed to be softer than the stand part (11), and **in that** the stand part (11) comprises a retaining projection that is connected to the projection (9) so as to penetrate the soft part (24) at least in part.

2. Foot according to claim 1, **characterised in that**, when the projection (9) moves relative to the lateral surface, the projection (9) interacts with the soft part (24) both by sitting thereon and by interacting with a free lateral surface.

3. Foot according to either of the preceding claims, **characterised in that** the stand part (11) interacts in an interlocking manner with the projection (9) in order to provide anti-loss retention.

4. Foot according to any of the preceding claims, **characterised in that** the projection (9) is received in the cup portion (16) so as to vertically cover the cup portion (16).

5. Foot according to any of the preceding claims, **characterised in that** the soft part (24) is annular at least in part.

6. Foot according to any of claims 3 to 5, **characterised in that** the interlocking is achieved by means of an overlapping disc (22).

7. Foot according to any of claims 4 to 6, **characterised in that** the projection (9) is tubular at least in part, in the portion thereof that covers the stand part (11).

8. Foot according to any of claims 4 to 7, **characterised in that** the material of the soft part (24) and the amount by which the projection (9) covers the flexible part (24) are selected and/or designed, with respect to all the feet of an appliance standing on a base, such that, when there is a horizontal displacement of 1 mm, a restoring force of 5 N or more is established.

9. Foot according to any of the preceding claims, **characterised in that**, with increasing horizontal displacement, the restoring force increases disproportionately.

## Revendications

1. Pied de support (6) d'un appareil, en particulier un robot de cuisine de table (1), dans lequel l'appareil comprend un boîtier (5) avec une extension (9) qui, en cas placement habituelle, fait saillie vers le bas et qui est en appui sur une partie de support (11) formant une surface de support (10) par le biais d'une partie molle (24), dans lequel la partie molle (24) est reçue dans une partie de coque ouverte sur le haut (16) de la partie de support (11), dans lequel l'extension (9) s'étend jusqu'en recouvrement latéral avec la partie de coque (16) et est reçue dans la partie de coque (16) en étant mobile verticalement, **caractérisé en ce que** l'extension (9) est reçue dans la partie de coque (16) en étant également mobile horizontalement, **en ce que** la partie molle (24) est configurée plus molle que la partie de support (11) et **en ce que** la partie de support (11) comprend une extension de maintien qui est reliée à l'extension (9) en traversant au moins partiellement la partie molle (24).

2. Pied de support selon la revendication 1, **caractérisé en ce que** l'extension (9) coopère avec la partie molle (24) d'une part par appui et d'autre part par coopération avec une surface latérale libre en cas de mobilité relative de l'extension (9) par rapport à la surface latérale.

3. Pied de support selon l'une des revendications précédentes, **caractérisé en ce que** la partie de support (11) coopère avec l'extension (9) par verrouillage de formes aux fins de maintien captif.

4. Pied de support selon l'une des revendications précédentes, **caractérisé en ce que** l'extension (9) est reçue dans la partie de coque (16) en étant en recouvrement vertical avec la partie de coque (16).

5. Pied de support selon l'une des revendications précédentes, **caractérisé en ce que** la partie molle (24) est conçue au moins partiellement annulaire.

6. Pied de support selon l'une des revendications 3 à 5, **caractérisé en ce que** le verrouillage de formes est obtenu par un disque de chevauchement (22).

7. Pied de support selon l'une des revendications 4 à 6, **caractérisé en ce que** l'extension (9) est formée au moins partiellement tubulaire dans sa partie se trouvant en recouvrement avec la partie de support (11).

8. Pied de support selon l'une des revendications 4 à 7, **caractérisé en ce que** le matériau de la partie molle (24) et le recouvrement de l'extension (9) par rapport à la partie molle (24) sont choisis ou réglés eu égard à tous les pieds de support d'un appareil en appui sur une surface de support de manière qu'une force de rappel élastique de 5 N ou plus survienne pour un déplacement horizontal de 1 mm.

9. Pied de support selon l'une des revendications précédentes, **caractérisé en ce que** la force de rappel élastique augmente plus que proportionnellement en cas de déplacement horizontal croissant.
